# EUROPEAN PATENT SPECIFICATION

(11) **EP 4 405 890 B1**
(45) Date of publication and mention of the grant of the patent: **26.08.2026**
(21) Application number: 21810252.3
(22) Date of filing: 22.10.2021
(51) Int. Cl.: G06T 5/60, G06T 5/94

(54) **IMAGE LIGHT REDISTRIBUTION BASED ON MACHINE LEARNING MODELS**
BILDLICHTUMVERTEILUNG AUF DER BASIS VON MASCHINENLERNMODELLEN
REDISTRIBUTION DE LUMIÈRE D'IMAGE BASÉE SUR DES MODÈLES D'APPRENTISSAGE AUTOMATIQUE

(43) Date of publication of application: 31.07.2024
(73) Proprietor: GOOGLE LLC, Mountain View CA 94043 (US)
(72) Inventor: PANDEY, Rohit Kumar, Mountain View, CA 94043 (US); LEGENDRE, Chloe, Mountain View, CA 94043 (US); ESCOLANO, Sergio, Orts, Mountain View, CA 94043 (US); FANELLO, Sean Ryan Francesco, Mountain View, CA 94043 (US); DEBEVEC, Paul, Mountain View, CA 94043 (US); SARMA, Navin Padman, Mountain View, CA 94043 (US); HAENE, Christian, Mountain View, CA 94043 (US)
(74) Representative: Thorniley, Peter
(86) International application number: PCT/US2021/071986
(87) International publication number: WO 2023/069124

(56) References cited:
- PHILLIP ISOLA ET AL: "Image-to-Image Translation with Conditional Adversarial Networks", ARXIV.ORG, 21 July 2017 (2017-07-21), US, pages 5967 - 5976, XP055620831, DOI: 10.1109/CVPR.2017.632
- PANDEY ROHIT ET AL: "Total relighting: Learning to Relight Portraits for Background Replacement", ACM TRANSACTIONS ON GRAPHICS, ACM, NY, US, vol. 40, no. 4, 19 July 2021 (2021-07-19), pages 1 - 21, XP058628537, ISSN: 0730-0301, DOI: 10.1145/3450626.3459872
- WANG ZHIBO ET AL: "Single image portrait relighting via explicit multiple reflectance channel modeling", ACM TRANSACTIONS ON GRAPHICS, ACM, NY, US, vol. 39, no. 6, 26 November 2020 (2020-11-26), pages 1 - 13, XP058682716, ISSN: 0730-0301, DOI: 10.1145/3414685.3417824
- AGUSANTO K ET AL: "Photorealistic rendering for augmented reality using environment illumination", PROCEEDINGS / THE SECOND IEEE AND ACM INTERNATIONAL SYMPOSIUM ON MIXED AND AUGMENTED REALITY : 7 - 10 OCTOBER 2003, TOKYO, JAPAN, IEEE COMPUTER SOCIETY, LOS ALAMITOS, CALIF. [U.A.], 7 October 2003 (2003-10-07), pages 208 - 216, XP010662812, ISBN: 978-0-7695-2006-3, DOI: 10.1109/ISMAR.2003.1240704

## Description

### BACKGROUND

Many modern computing devices, including mobile phones, personal computers, and tablets, include image capture devices, such as still and/or video cameras. The image capture devices can capture images, such as images that include people, animals, landscapes, and/or objects.

Some image capture devices and/or computing devices can correct or otherwise modify captured images. For example, some image capture devices can provide "red-eye" correction that removes artifacts such as red-appearing eyes of people and animals that may be present in images captured using bright lights, such as flash lighting. Also, for example, some image capture devices can provide image editing features such as relighting to modify the lighting in an image. After a captured image has been corrected and/or edited, the modified image can be saved, displayed, transmitted, printed to paper, and/or otherwise utilized.

Portraits taken in a casual photography setting may have undesirable environmental lighting conditions, causing undesirable portrait appearance in captured photos. For instance, a portrait under strong directional lighting or with objects occluding a scene's light source may have undesirable shadows that may detract from the portrait's overall appearance. In another example, a portrait may exhibit strong specular highlights, which are bright spots that may be generally white-colored spots that appear because of a very bright point or spotlight source in the scene. For example, an indoor spotlight lamp or the sun for outdoor photographs may be a very bright point or spotlight source. In some aspects, photographers may have access to a tool such as a "scrim," that can diffuse scene lighting and reduce the harshness of the illumination falling on the subject. However, such features are not available on mobile devices. In the context of general image processing, the following methods are known. Pandey et al., "Total Relighting: Learning to Relight Portraits for Background Replacement," ACM Transactions on Graphics 40(4), 2021, discloses a neural-network portrait relighting method that takes an input portrait and predicts a relit output portrait under target illumination for realistic background replacement. Wang et al., "Single image portrait relighting via explicit multiple reflectance channel modeling," ACM Transactions on Graphics 39(6), 2020, discloses a neural-network portrait relighting approach that explicitly models multiple reflectance-related channels (including specular/diffuse-like components) to synthesize a relit portrait image. Isola et al., "Image-to-Image Translation with Conditional Adversarial Networks," CVPR, 2017, discloses paired image-to-image translation using a conditional GAN with a U-Net generator to predict an output image from an input image, e.g., a night-time image form a day-time image.

Mobile phone applications are limited in an amount of available computational resources. Accordingly, enabling users access to realistic, professional, and high-quality image enhancement features, while utilizing low computational resources, is a significant technological improvement.

### SUMMARY

In one aspect, a computing device, such as an image capture device, may be configured to perform an image adjustment task, such as reducing specular highlights, and/or redistributing light to shadow regions of an image. Powered by a system of machine-learned components, the computing device may be configured to enable users to create attractive portraits or other types of images. For example, the computing device may be configured to soften an appearance of harsh shadows in a scene. Also, for example, the computing device may be configured to soften, or altogether remove, bright specular highlights, using machine learning techniques. Generally, to perform such functions, a neural network may have to predict an albedo, which requires additional computational resources. However, predicting an albedo may require additional computing resources. Also, for example, an albedo predictor may change a color characteristic of the image, which may not be ideal. Accordingly, the computing device may be configured to reduce specular highlights, and/or redistribute light to shadow regions of an image without a need to predict an albedo for the image. This facilitates the techniques to be implemented on a mobile device by utilizing low computational resources.

In some aspects, a light diffusion technique is described that may be a digital analogue to a real-world photograph's tool called a "scrim," whose purpose is to diffuse scene lighting and reduce the harshness of the illumination falling on the subject. Also, for example, the computing device may be configured to enable users to select an amount of light redistribution. In some aspects, the computing device may be configured to make an inference about a color composition underneath a specular highlight in an image.

In order to perform such functions, the computing device may be configured to utilize one or more intermediate outputs of a machine learning model for model training supervision. A "pixel-aligned" lighting representation can be utilized that takes a target lighting environment and maps it directly into a coordinate space of a target image. Such a lighting representation may be based on computer graphics rendering techniques, such as, for example a diffuse convolution operation, and one or more specular convolution operations. The lighting representation, as described herein, is suitable for U-net type neural network architectures, where a spatial alignment of inputs is of high significance. In some embodiments, the U-net architecture may be configured to maintain high frequency aspects of the input image. One of the advantages of this lighting representation is that there is no longer a need to learn a complicated mapping from a representation of lighting environment coordinates to a representation of image coordinates. Another advantage of the lighting representation is to enable the light redistribution model to generate complex non-Lambertian reflectance while correctly inferring lower-frequency color and shading under the target illumination.

As described herein, a machine learning model can be trained on relit images of subjects captured in a light stage computational illumination system, which can record a plurality of lighting conditions, high quality geometry, and/or accurate alpha mattes. A per-pixel lighting representation in a deep learning framework may be utilized to model diffuse and specular components of a subject's appearance.

In some aspects, mobile devices may be configured with these features so that an image can be enhanced in real-time. Also, for example, the described methods can be applied to in-the-wild images, including images in video content. In some instances, an image may be automatically enhanced by the mobile device. In other aspects, mobile phone users can non-destructively enhance an image to match their preference. Also, for example, pre-existing images in a user's image library can be enhanced based on techniques described herein.

In one aspect, a computer-implemented method is provided. The method includes receiving, by a computing device, an input image comprising a subject. The method further includes adjusting, by a neural network, one or more of a specular component or a diffuse component associated with the input image. The adjusting involves redistributing a per-pixel light energy of the input image. The method additionally includes predicting, by the neural network, an output image comprising the subject with the adjusted one or more of the specular component or the diffuse component.

In another aspect, a computing device is provided. The computing device includes one or more processors and data storage. The data storage has stored thereon computer-executable instructions that, when executed by one or more processors, cause the computing device to carry out functions. The functions include receiving, by a computing device, an input image comprising a subject. The functions further include adjusting, by a neural network, one or more of a specular component or a diffuse component associated with the input image. The adjusting involves redistributing a per-pixel light energy of the input image. The functions also include predicting, by the neural network, an output image comprising the subject with the adjusted one or more of the specular component or the diffuse component.

In another aspect, an article of manufacture is provided. The article of manufacture includes one or more computer readable media having computer-readable instructions stored thereon that, when executed by one or more processors of a computing device, cause the computing device to carry out functions. The functions include receiving, by a computing device, an input image comprising a subject. The functions further include adjusting, by a neural network, one or more of a specular component or a diffuse component associated with the input image. The adjusting involves redistributing a per-pixel light energy of the input image. The functions also include predicting, by the neural network, an output image comprising the subject with the adjusted one or more of the specular component or the diffuse component.

In another aspect, a system is provided. The system includes means for receiving, by a computing device, an input image comprising a subject; means for adjusting, by a neural network, one or more of a specular component or a diffuse component associated with the input image, wherein the adjusting involves redistributing a per-pixel light energy of the input image; and means for predicting, by the neural network, an output image comprising the subject with the adjusted one or more of the specular component or the diffuse component.

The foregoing summary is illustrative only and is not intended to be in any way limiting. In addition to the illustrative aspects, embodiments, and features described above, further aspects, embodiments, and features will become apparent by reference to the figures and the following detailed description and the accompanying drawings.

### BRIEF DESCRIPTION OF THE FIGURES

FIG. 1 illustrates an example inference phase of a neural network to adjust one or more of a specular component or a diffuse component associated with an input image, in accordance with example embodiments.
FIG. 2 an example training phase of a neural network to adjust one or more of a specular component or a diffuse component associated with an input image, in accordance with example embodiments.
FIG. 3 illustrates an example linear interpolation of an input image and an output image, in accordance with example embodiments.
FIG. 4 is a diagram illustrating training and inference phases of a machine learning model, in accordance with example embodiments.
FIG. 5 depicts a distributed computing architecture, in accordance with example embodiments.
FIG. 6 is a block diagram of a computing device, in accordance with example embodiments.
FIG. 7 depicts a network of computing clusters arranged as a cloud-based server system, in accordance with example embodiments.
FIG. 8 is a flowchart of a method, in accordance with example embodiments.

### DETAILED DESCRIPTION

### Overview

This application relates to enhancing an image of an object, such as an object depicting a human face, by a redistribution of light energy using machine learning techniques, such as but not limited to neural network techniques. The application also relates to reducing specular highlights and/or softening shadows. When a mobile computing device user takes an image of an object, such as a person, the resulting image may not always have ideal specular or shadow components. For example, the image include specular highlights or heightened shadows. Further, even if the image does have a desired specular and/or shadow components at one time, the user may want to modify these components at a later time. As such, an image-processing-related technical problem arises that involves redistribution of light energy of an already-obtained image.

To allow user control of redistribution of light energy, such as in images of human faces, the herein-described techniques apply a model based on a convolutional neural network to redistribute light energy. The herein-described techniques include receiving an input image, adjusting one or more of a specular component or a diffuse component associated with the input image, wherein the adjusting comprises redistributing a per-pixel light energy of the input image, and predicting an output image comprising the subject with the adjusted one or more of the specular component or the diffuse component. The input and output images can be high-resolution images, such as multi-megapixel sizes images captured by a camera of a mobile computing device. The convolutional neural network can work well with input images captured under a variety of natural and artificial lighting conditions. In some examples, a trained model of the convolutional neural network can work on a variety of computing devices, including but not limited to, mobile computing devices (e.g., smart phones, tablet computers, cell phones, laptop computers), stationary computing devices (e.g., desktop computers), and server computing devices.

A neural network, such as a convolutional neural network, can be trained using a training data comprising pairs of images to perform one or more aspects as described herein. In some examples, the neural network can be arranged as an encoder/decoder neural network.

Human faces typically reflect light diffusely but can also include some specular highlights due to directly reflected light. For example, specular highlights can result from direct light reflections from eye surfaces, glasses, jewelry, etc. In many images of human faces, such specular highlights are relatively small in area in proportion to areas of facial surfaces that diffusely reflect light. Thus, the neural network can be trained to apply light redistribution to images of objects that diffusely reflect light, and include specular highlights. The images in the training data set can show one or more particular objects using lighting provided under a plurality of different conditions, such as lighting provided from different directions, lighting provided of varying intensities (*e.g*. brighter and dimmer lighting), lighting provided with light sources of different colors, lighting provided with different numbers of light sources, etc.

A trained neural network can process the input image to predict an output image comprising the subject with the adjusted one or more of the specular component or the diffuse component. In one example, (a copy of) the trained neural network can reside on a mobile computing device. The mobile computing device can include a camera that can capture an input image of an object, such as an image of a person's face. A user of the mobile computing device can view the input image and determine that the input image should be adjusted. In response, the trained neural network can generate a predicted output image that shows an adjusted output image based on techniques described herein, and subsequently output the output image (*e.g*., provide the output image for display by the mobile computing device). In another example, the user of the mobile computing device can view the input image and determine an amount of redistribution of light to be applied. In response, the trained neural network can generate a predicted output image that shows the input image with the indicated amount of redistribution.

In other examples, the trained neural network is not resident on the mobile computing device; rather, the mobile computing device provides the input image to a remotely-located trained neural network (*e.g*., via the Internet or another data network). The remotely-located convolutional neural network can process the input image and provide an output image that shows the redistribution of light of the input image to the mobile computing device. In other examples, non-mobile computing devices can also use the trained neural network to redistribute light, including images that are not captured by a camera of the computing device.

As such, the herein-described techniques can improve images by applying more desirable and/or selectable redistribution of light to images, thereby enhancing their actual and/or perceived quality. Enhancing the actual and/or perceived quality of images, including portrait images of people, can provide emotional benefits to those who believe their pictures look better. These techniques are flexible, and so can apply a wide variety of lighting representations of human faces and other objects, particularly other objects with similar lighting characteristics.

### Techniques for Light Redistribution Using Neural Networks

A light redistribution network can be designed to computationally redistribute light for consumer photography or other applications. As described herein, these methods are applicable to arbitrary omnidirectional input and target lighting environments. Also, for example, in addition to delivering realistic results for low-frequency lighting, the network is also able to adjust shadows and specular highlights appropriate for lighting with highfrequency detail.

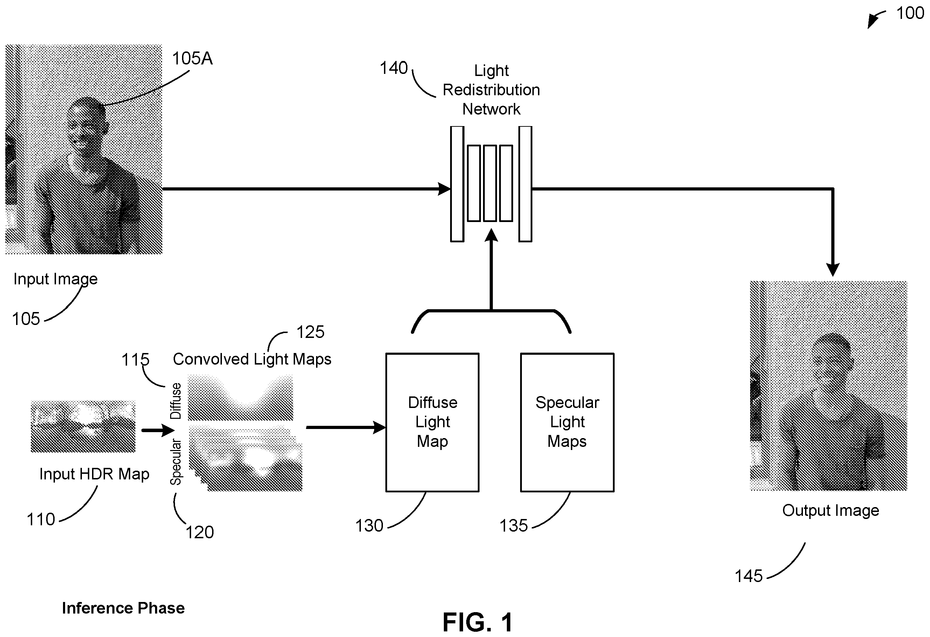

FIG. 1 illustrates an example inference phase of a neural network 100 to adjust one or more of a specular component or a diffuse component associated with an input image, in accordance with example embodiments. In some embodiments, the method involves receiving, by a computing device, an input image 105 comprising a subject 105A. Light redistribution network 140 adjusts one or more of a specular component or a diffuse component associated with the input image 105, wherein the adjusting comprises redistributing a per-pixel light energy of the input image. In some aspects, light redistribution network 140 calculates a per-pixel lighting representation or light maps, such as specular light maps 135 which encode the specular components, and a diffuse light map 130 which encodes the diffuse components of surface reflection for a given omnidirectional high dynamic range (HDR) lighting environment 110. In some embodiments, the adjusting of one or more of the specular component or the diffuse component includes adjusting of the specular component, and wherein the redistributing of the per-pixel light energy involves reducing a specular highlight associated with the subject. In some embodiments, the adjusting of the one or more of the specular component or the diffuse component includes adjusting of the diffuse component, and wherein the redistributing of the per-pixel light energy involves reducing a per-pixel light energy of a shadow region of the input image.

In some embodiments, the method involves predicting, via the neural network, an output image 146 comprising the subject with the adjusted one or more of the specular component or the diffuse component.

Some embodiments involve predicting, via the neural network, a plurality of per-pixel surface normal representation. A surface normal is a representation of surface normal vectors stored as a Red Green Blue (RGB) image where the RGB components correspond to the ***x, y, z*** coordinates, respectively, of the normal vector. Some embodiments involve predicting, via the neural network and based on input image 105, a per-pixel albedo image. The term, "albedo," as used herein, may generally refer to a representation of a proportion of an incident light that is diffusely reflected by a surface, without being absorbed by the surface. For example, an object that is perceived as of a lighter color reflects a larger proportion of the incident light and therefore has a higher albedo. Likewise, an object that is perceived as of a darker color reflects a smaller proportion of the incident light and therefore has a lower albedo.

Some embodiments involve pre-filtering the target illumination. The pre-filtering may be based on a convolved specular light map and a convolved diffuse light map. The specular component and the diffuse component of the surface reflection may be determined by sampling the convolved specular light map and the convolved diffuse light map by using one or more of a surface normal or a reflection vector. For example, a HDR lighting environment, such as input HDR map 230, may be pre-filtered using convolved light maps 125, including diffuse convolved light map 115 and one or more specular convolved light maps 120. Generally, an object may have different light reflection characteristics that may depend, for example, on a surface geometry, color, and/or a material of the object. Also, for example, a surface of an object may be composed of a plurality of materials, thereby creating complex light reflection characteristics. The term "diffuse map" as used herein generally refers to an image of an object that is representative of its diffuse reflection. Diffuse reflection is a type of surface reflectance where incident light is reflected and scattered into a plurality of directions (e.g., reflection by a rough surface). The diffuse map may be indexed by a set of color values that are indicative of a texture (*e.g*., color and pattern) of the object. The term "specular map" as used herein generally refers to an image of an object that is representative of its specular reflection. Specular reflection is a type of surface reflectance where incident light is reflected into a unidirectional reflected light (*e.g*. reflection by a smooth, and/or shiny surface). The specular map represents a shininess characteristic of a surface and its highlight color.

The prefiltered diffuse convolved light map 115 and one or more specular convolved light maps 110 may be sampled using reflection vectors, producing a per-pixel representation of diffuse and specular reflectance for the target illumination, represented as diffuse light map 130 and one or more specular light maps 135.

For example, after precomputing a diffuse irradiance map, such as, for example, diffuse convolved light map 115, and a plurality of prefiltered HDR environment maps with different Phong exponents (*e.g.,* ***n* = 1, 16, 32, 64),** such as, for example, the one or more specular light maps 120, at training or inference time, diffuse and specular reflectance images or light maps, such as, for example, diffuse light map 130 and one or more specular light maps 135, can be computed by indexing into the prefiltered maps, diffuse light map 130 and one or more specular light maps 135.

In some embodiments, a neural network may be configured to predict the specular light map 135. Such a neural network may model an uncertainty in the material properties of the one or more materials of input image 105. In some aspects, one or more specular light maps 120 may be generated with a plurality of Phong exponents ***n*.** In some embodiments, the neural network may be configured as an U-Net architecture. For example, the neural network may be configured to have an architecture with **13** encoder-decoder layers with **8, 16, 32, 64, 128, 256,** filters for the encoder, **256** for the bottleneck, and **256, 128, 64, 32, 16, 8** filters for the decoder, respectively. The neural network may be run through 3 × 3 convolutions followed by Leaky ReLU activations. The output of the neural network may be a four channel per-pixel weight image ***w*.** A single specular light map 135 represented as ***Ŝ*,** may be obtained by taking a weighted sum of candidate one or more specular light maps 120 represented as ***Sₙ*** and using a per-pixel weight image ***w*.** For example, for a pixel represented with pixel coordinates **(*u*, *v),*** specular light map 135 may be determined as: $\hat{S} \left(u, v\right) = {\sum }_{n} {w}_{n} \left(u, v\right) {S}_{n} \left(u, v\right)$
where the summation is over the plurality of Phong exponents ***n*.**

A convolutional neural network, such as light redistribution network 140 described herein, can be a fully-convolutional neural network. During training, the convolutional neural network can receive as inputs one or more input training images. The convolutional neural network can include layers of nodes for processing an input image. Example layers can include, but are not limited to, input layers, convolutional layers, activation layers, pooling layers, and output layers. Input layers can store input data, such as pixel data of an input image and inputs from other layers of the convolutional neural network. Convolutional layers can compute an output of neurons connected to local regions in the input. In some examples, the predicted outputs can be fed back into the convolutional neural network again as input to perform iterative refinement. Activation layers can determine whether or not an output of a preceding layer is "activated" or actually provided (*e.g*., provided to a succeeding layer). Pooling layers can downsample the input. For example, the convolutional neural network can involve one or more pooling layers to downsample the input by a predetermined factor (*e.g.,* a factor of two) in the horizontal and/or vertical dimensions. In some examples, some or all of the pooling layers in the convolutional neural network can downsample an input by a common factor in both horizontal and vertical dimensions, while not downsampling depth dimensions associated with the input. The depth dimensions could store data for pixel colors (red, green, blue) and/or data representing scores. Other common factors for downsampling other than two can be used as well by one or more (pooling) layers of the convolutional neural network.

Output layers can provide an output of the convolutional neural network to software and/or hardware interfacing with the conventional neural network; *e.g*. to hardware and/or software used to display, print, communicate and/or otherwise provide a relit image, and/or a relit image in a new background. Each layer of the convolutional neural network can include one or more input layers, output layers, convolutional layers, activation layers, pooling layers, and/or other layers described herein.

### Loss Functions and Training

As described herein, environmental light in a portrait may be diffused or blurred, resulting in an elimination or reduction of a severity of shadows, and/or elimination or reduction of a severity of specular highlights. Generally, for images that have high specular highlights, especially images that are already in a low dynamic range, the specular highlights may be clipped. For example, an image sensor may have been saturated. Since the specular highlights are clipped, a full dynamic range of the specular highlight may no longer be available for recovery. Accordingly, changing an exposure on the image, such as stepping down or darkening the image to remove the appearance of a specular highlight, may no longer be possible since the full amount of environmental light in the scene was not captured. Therefore, the specular highlight cannot be adjusted by changing the exposure. Instead, this may be achieved by generating training pairs 210, as described herein.

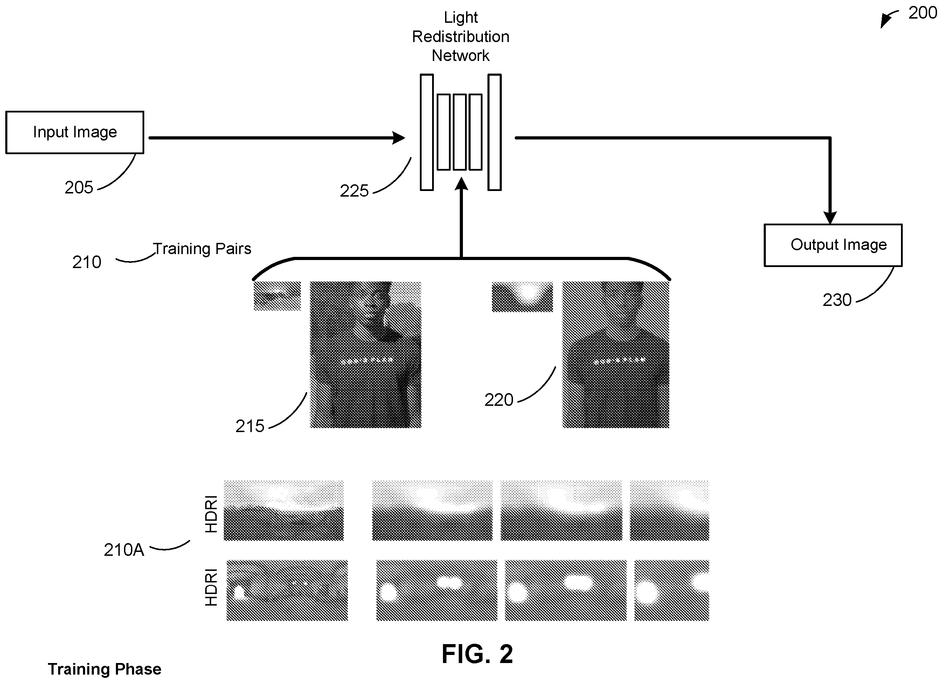

FIG. 2 an example training phase of a neural network 200 to adjust one or more of a specular component or a diffuse component associated with input image 205, in accordance with example embodiments. In some embodiments, light redistribution network 225 may be trained to receive a particular input image 205 with a particular subject, and predict a particular output image 230 comprising the subject with a particular adjusted one or more of the specular component or the diffuse component. In some embodiments, a training dataset may include a plurality of image pairs 210, where a first image 215 of a given image pair comprises a subject in a lighting environment, and where a second image 220 of the given image pair comprises the subject in a diffused version of the lighting environment. Generally, each training pair 210 comprises two versions of the image in a same lighting environment, where second image 220 is the same as first image 210 in a blurred version of the environment.

For example, to train the machine learning models using supervision, several paired images 210 may be used, with a first image 215 in the pair including images of different subjects lit in various lighting environments, and a second image 220 in the pair including a diffused version of these images. In some implementations, to generate first image 215, a subject's reflectance field may be photographed in a computer-controllable sphere of white LED light sources, for example, with lights spaced 12° apart at the equator. In such implementations, the reflectance field is formed from a set of reflectance basis images, photographing the subject as each of the directional LED light sources is individually turned on one-at-a-time within the spherical rig. Such One-Light-at-a-Time (OLAT) images are captured for multiple camera viewpoints. In some implementations, the light stage may have 331 programmable LED-based lights and 58 RGB cameras, recording video at 60Hz with 12.4 megapixel resolution, although these values and number of OLAT images and types of cameras used may differ in some implementations.

In some implementations, reflectance fields for 70 diverse subjects may be used, each subject performing nine different facial expressions and wearing different clothing and accessories (*e.g*., hats, scarves, etc.), yielding about 700 sets of OLAT sequences from multiple camera viewpoints. In some implementations, approximately 10% of the OLAT sequences may be recorded with 58 cameras, covering the full 360⁰ of possible vantage points to provide training examples from arbitrary viewpoints, covering the full body. The remaining 90% of the OLAT sequences may be recorded with a subset of six frontal viewpoints intended to emulate the framing of casual photography. In one implementation, 7,560 unique sequences may be recorded for the 58 RGB cameras, which were then relit and composited using approximately 200 HDR panoramic lighting environments using random rotations, thereby generating 8 million training examples. Other quantities of sets of OLAT sequences may be used. For evaluation purposes, the dataset may be divided into sets for training and testing. In some instances, seven subjects with diverse skin tones may be selected for the test set, along with ten lighting environments.

In some embodiments, the lighting environment may be a high dynamic range lighting environment, and wherein the training may involve generating a specular convolution of a portion of the high dynamic range lighting environment. For example, to generate second image 220, diffused versions of the OLAT images such as first image 215 may be generated. In some embodiments, a diffuse convolution operation may be applied. For example, a blurred version of the environment convolved with a Lambertian reflectance may be generated, and then a second image in the pair is the same subject in a blurred version of the environment. In some embodiments, the generating of the specular convolution may involve applying a Phong Reflectance Model. In some embodiments, second image 220 of training pair 210 may be generated by diffusing only portions of an environment rather than an entire environment. This may enable more targeted effects in specularity dampening and/or shadow removal. For example, diffused light environments corresponding to HDR panorama is shown in images 210A. A diffuse convolution or a specular convolution of input image 205, or a portion of input image 205, may be generated for the HDR panorama of input image 205. Image 210A illustrates lighting panoramas with different amounts of diffusion, for example, based on variants of the Phong Reflectance Model.

In some embodiments, the training may involve applying an adversarial loss function to a selected portion of the subject, such as a face portion of the subject. Generally, the adversarial loss on the face portion allows the light redistribution network 225 to learn to generate plausible, more photorealistic facial imagery.

Accordingly, light redistribution network 225 may be trained to remove shadows, and/or remove bright highlight regions. Input image 205 and output image 230 have the same total light energy; however, the light energy is redistributed over a larger area. Therefore, strong shadows and specularities are softened. Such a technique is especially advantageous for portraits because harsh shadows or specular highlights may cause undesirable effects in images that users may want to remove. In some embodiments, light redistribution network 225 may maintain an average of global color values associated with input image 205. For example, the average overall color balance of the image may be preserved. This is especially significant since softening of shadows and/or specularities may generally lead to an imbalance in the overall color attributes of the image.

In some embodiments, light redistribution network 225 may predict one or more characteristics of a color scheme associated with the specular component. For example, specular highlights generally do not include information about an underlying diffused color. Accordingly, light redistribution network 225 may learn to make an inference about the color underneath the specular highlight. A machine learning based approach enables such inference plausible.

In some embodiments, one of the evaluation subjects may be evaluated as illuminated by one or more directional light sources, generating HDR panoramic lighting environments to approximately match the positioning of the lights within the light stage. This framework may be utilized to synthesize OLAT or reflectance field basis images. Single light sources can be used to emphasize complex light transport effects such as specular highlights and subsurface scattering, which enable true photorealism. As described herein, the methods may synthesize both diffuse and specular components and may be configured to learn self-shadowing directly from the data.

### Example Applications

Some embodiments involve providing, by a graphical user interface of the computing device, a user-adjustable slider bar to indicate an amount of the adjusting of the one or more of the specular component or the diffuse component. For example, a horizontal slider bar may be displayed, where a left end of the bar represents no image adjustments (*e.g*., such as an input image), and a right end of the bar represents a maximum predicted image adjustment (*e.g*., such as an output image). Middle portions of the bar may represent intermediate image adjustments.

Such embodiments also involve receiving, by the graphical user interface, a user-indication of the amount of the adjusting of the one or more of the specular component or the diffuse component. For example, a user may move a small virtual object along the slider bar from left to right and vice versa to indicate a position on the slider bar. An amount of image adjustments corresponding to the position of the small virtual object on the slider bar may be applied to the input image. Such embodiments further involve providing, by the graphical user interface, the output image based on the user indicated amount of the adjusting.

In some embodiments, the providing of the output image involves applying a linear interpolation of the input image and the output image. The linear interpolation may be based on the user-indication. As described herein, a user may indicate an amount of the specularity to be reduced, and/or an amount of light to be diffused. Accordingly, the computing device may linearly interpolate between the input image and the output image from the from the machine learning model. Generally, the interpolation may be performed in an image space. The amount of specularity may change as images progress from input image to output image. For example, based on a user indication of the amount of desired diffusion and/or specularity, one of the intermediate images may be generated by interpolating between the input image and the output image. For example, the pixels in the input image and the output image may be linearly interpolated to generate intermediate images.

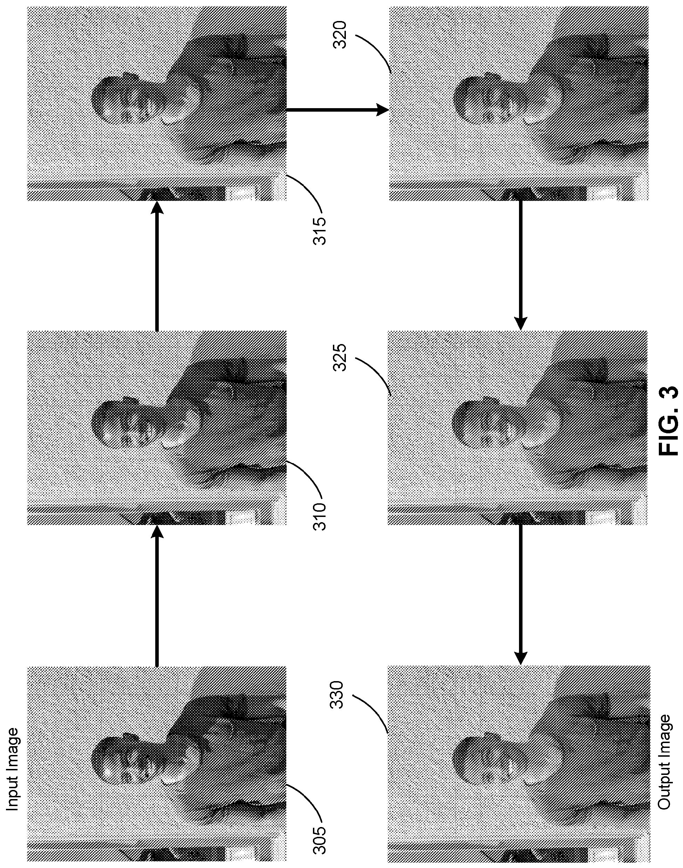

FIG. 3 illustrates an example linear interpolation of input image 305 and output image 330, in accordance with example embodiments. For example, one or more intermediate images 310, 315, 320, and 325 are illustrated. The one or more intermediate images 310, 315, 320, and 325 may be generated by interpolating between input image 305 and output image 330. Input image 305 includes strong shadows and bright white highlights. As indicated, as images progress from input image 305 through intermediate images 310, 315, 320, and 325, to output image 330, a specular highlight (e.g., bright white spot on the forehead of the subject) is gradually removed, and shadow regions (e.g., on the right side of the face of the subject) is gradually brightened. As indicated in output image 330, the bright white spot on the forehead is eliminated, and shadow regions under the eyes are considerably reduced. Also, for example, a global color scheme is maintained.

In some embodiments, the adjusting of the one or more of the specular component or the diffuse component involves predicting, by the neural network, the output image based on the user indicated amount of the adjusting. For example, a neural network may receive as input an amount of diffusion. For example, a value of 80% diffusion may be provided to the neural network. Accordingly, the network may directly control the amount of diffusion in the output image. In some embodiments, variants of the Phong Reflectance Model may be used to control an amount of diffusion in the HDR lighting environment that is used for training data, as illustrated in image 210A of FIG. 2. So a neural network can be trained to control the diffusion applied base on the training data.

Some embodiments involve providing the output image as an input to another neural network configured to perform image relighting. For example, an output of the light redistribution network may be provided to an image relighting network that predicts a relit image. For example, an automatic directional light may be applied to the adjusted image output by the light redistribution network.

Some embodiments involve providing the output image as an input to another neural network configured to perform portrait background replacement. For example, an output of the light redistribution network may be provided to a background replacement network that takes an input image with a first background and predicts an output image in a target background and a target environmental lighting. Additional and/or alternative image processing neural networks may be provided with the output of the light redistribution network.

As described herein, adjusting the specular or shadow component may be performed without predicting an albedo, a surface geometry, and so forth. Accordingly, such a simple neural network may be adaptable to a mobile device as it removes significant constraints on computational resources.

### Training Machine Learning Models for Generating Inferences/Predictions

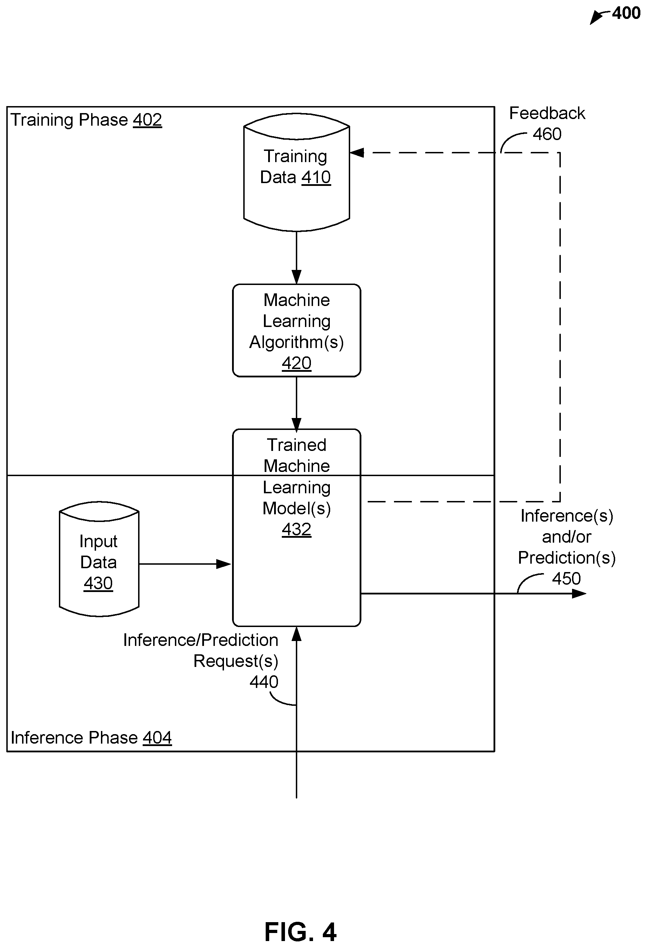

FIG. 4 shows diagram 400 illustrating a training phase 402 and an inference phase 404 of trained machine learning model(s) 432, in accordance with example embodiments. Some machine learning techniques involve training one or more machine learning algorithms, on an input set of training data to recognize patterns in the training data and provide output inferences and/or predictions about (patterns in the) training data. The resulting trained machine learning algorithm can be termed as a trained machine learning model. For example, FIG. 4 shows training phase 402 where one or more machine learning algorithms 420 are being trained on training data 410 to become trained machine learning model 432. Then, during inference phase 404, trained machine learning model 432 can receive input data 430 and one or more inference/prediction requests 440 (perhaps as part of input data 430) and responsively provide as an output one or more inferences and/or predictions 450.

As such, trained machine learning model(s) 432 can include one or more models of one or more machine learning algorithms 420. Machine learning algorithm(s) 420 may include, but are not limited to: an artificial neural network (*e.g.,* a herein-described convolutional neural networks, a recurrent neural network, a Bayesian network, a hidden Markov model, a Markov decision process, a logistic regression function, a support vector machine, a suitable statistical machine learning algorithm, and/or a heuristic machine learning system). Machine learning algorithm(s) 420 may be supervised or unsupervised, and may implement any suitable combination of online and offline learning.

In some examples, machine learning algorithm(s) 420 and/or trained machine learning model(s) 432 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 420 and/or trained machine learning model(s) 432. In some examples, trained machine learning model(s) 432 can be trained, reside and execute to provide inferences on a particular computing device, and/or otherwise can make inferences for the particular computing device.

During training phase 402, machine learning algorithm(s) 420 can be trained by providing at least training data 410 as training input using unsupervised, supervised, semi-supervised, and/or reinforcement learning techniques. Unsupervised learning involves providing a portion (or all) of training data 410 to machine learning algorithm(s) 420 and machine learning algorithm(s) 420 determining one or more output inferences based on the provided portion (or all) of training data 410. Supervised learning involves providing a portion of training data 410 to machine learning algorithm(s) 420, with machine learning algorithm(s) 420 determining one or more output inferences based on the provided portion of training data 410, and the output inference(s) are either accepted or corrected based on correct results associated with training data 410. In some examples, supervised learning of machine learning algorithm(s) 420 can be governed by a set of rules and/or a set of labels for the training input, and the set of rules and/or set of labels may be used to correct inferences of machine learning algorithm(s) 420.

Semi-supervised learning involves having correct results for part, but not all, of training data 410. During semi-supervised learning, supervised learning is used for a portion of training data 410 having correct results, and unsupervised learning is used for a portion of training data 410 not having correct results. Reinforcement learning involves machine learning algorithm(s) 420 receiving a reward signal regarding a prior inference, where the reward signal can be a numerical value. During reinforcement learning, machine learning algorithm(s) 420 can output an inference and receive a reward signal in response, where machine learning algorithm(s) 420 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 420 and/or trained machine learning model(s) 432 can be trained using other machine learning techniques, including but not limited to, incremental learning and curriculum learning.

In some examples, machine learning algorithm(s) 420 and/or trained machine learning model(s) 432 can use transfer learning techniques. For example, transfer learning techniques can involve trained machine learning model(s) 432 being pre-trained on one set of data and additionally trained using training data 410. More particularly, machine learning algorithm(s) 420 can be pre-trained on data from one or more computing devices and a resulting trained machine learning model provided to a particular computing device, where the particular computing device is intended to execute the trained machine learning model during inference phase 404. Then, during training phase 402, the pre-trained machine learning model can be additionally trained using training data 410, where training data 410 can be derived from kernel and non-kernel data of the particular computing device. This further training of the machine learning algorithm(s) 420 and/or the pre-trained machine learning model using training data 410 of the particular computing device's data can be performed using either supervised or unsupervised learning. Once machine learning algorithm(s) 420 and/or the pre-trained machine learning model has been trained on at least training data 410, training phase 402 can be completed. The trained resulting machine learning model can be utilized as at least one of trained machine learning model(s) 432.

In particular, once training phase 402 has been completed, trained machine learning model(s) 432 can be provided to a computing device, if not already on the computing device. Inference phase 404 can begin after trained machine learning model(s) 432 are provided to the particular computing device.

During inference phase 404, trained machine learning model(s) 432 can receive input data 430 and generate and output one or more corresponding inferences and/or predictions 450 about input data 430. As such, input data 430 can be used as an input to trained machine learning model(s) 432 for providing corresponding inference(s) and/or prediction(s) 450 to kernel components and non-kernel components. For example, trained machine learning model(s) 432 can generate inference(s) and/or prediction(s) 450 in response to one or more inference/prediction requests 440. In some examples, trained machine learning model(s) 432 can be executed by a portion of other software. For example, trained machine learning model(s) 432 can be executed by an inference or prediction daemon to be readily available to provide inferences and/or predictions upon request. Input data 430 can include data from the particular computing device executing trained machine learning model(s) 432 and/or input data from one or more computing devices other than the particular computing device.

Input data 430 can include a collection of images provided by one or more sources. The collection of images can include images of an object, such as a human face, where the images of the human face are taken under different lighting conditions, images of multiple objects, images resident on the particular computing device, and/or other images. Other types of input data are possible as well.

Inference(s) and/or prediction(s) 450 can include output foregrounds, alpha mattes, albedos, surface normals, diffuse and specular light maps, numerical values, and/or other output data produced by trained machine learning model(s) 432 operating on input data 430 (and training data 410). In some examples, trained machine learning model(s) 432 can use output inference(s) and/or prediction(s) 450 as input feedback 460. Trained machine learning model(s) 432 can also rely on past inferences as inputs for generating new inferences.

Convolutional neural networks 225 can be an example of machine learning algorithm(s) 420. After training, the trained version of convolutional neural networks 225, such as light redistribution network 140, can be examples of trained machine learning model(s) 432. In this approach, an example of inference / prediction request(s) 440 can be a request to predict an output image comprising a subject with an adjusted one or more of a specular component or a diffuse component, and a corresponding example of inferences and/or prediction(s) 450 can be the output image.

In some examples, a given computing device can include the trained version of convolutional neural networks 140, perhaps after training convolutional neural networks 225. Then, the given computing device can receive requests to predict an output image comprising a subject with an adjusted one or more of a specular component or a diffuse component, and use the trained version of convolutional neural networks 140 to generate the output image.

In some examples, two or more computing devices can be used to provide output images; e.g., a first computing device can generate and send requests to predict an output image comprising a subject with an adjusted one or more of a specular component or a diffuse component to a second computing device. Then, the second computing device can use the trained versions of convolutional neural networks 140, perhaps after training convolutional neural networks 225, to generate output images, and respond to the requests from the first computing device for the output images. Then, upon reception of responses to the requests, the first computing device can provide the requested output images (e.g., using a user interface and/or a display, a printed copy, an electronic communication, etc.).

### Example Data Network

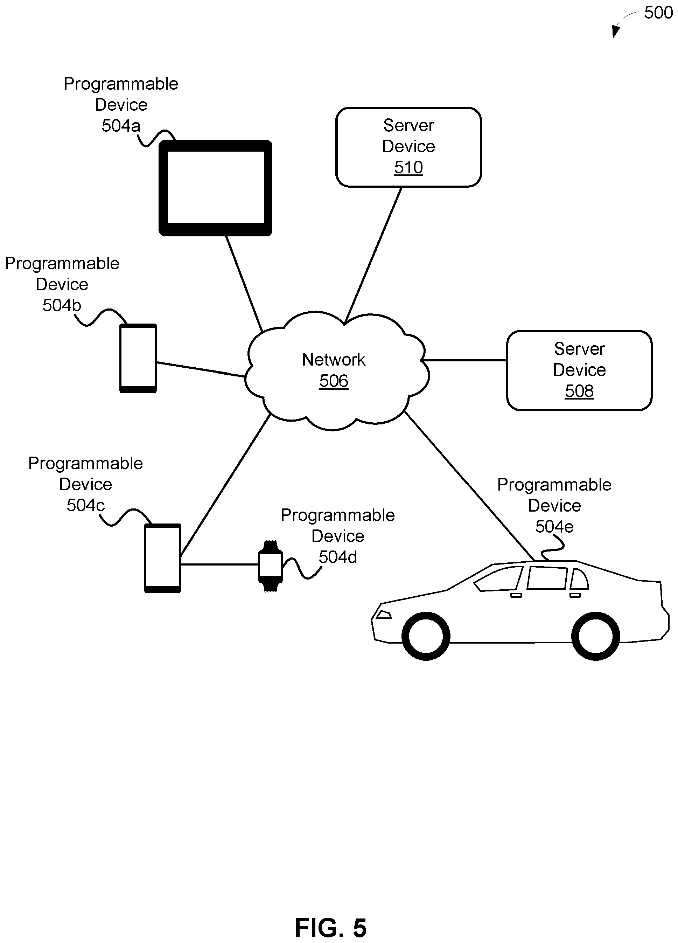

FIG. 5 depicts a distributed computing architecture 500, in accordance with example embodiments. Distributed computing architecture 500 includes server devices 508, 510 that are configured to communicate, via network 506, with programmable devices 504a, 504b, 504c, 504d, 504e. Network 506 may correspond to a local area network (LAN), a wide area network (WAN), a WLAN, a WWAN, a corporate intranet, the public Internet, or any other type of network configured to provide a communications path between networked computing devices. Network 506 may also correspond to a combination of one or more LANs, WANs, corporate intranets, and/or the public Internet.

Although FIG. 5 only shows five programmable devices, distributed application architectures may serve tens, hundreds, or thousands of programmable devices. Moreover, programmable devices 504a, 504b, 504c, 504d, 504e (or any additional programmable devices) may be any sort of computing device, such as a mobile computing device, desktop computer, wearable computing device, head-mountable device (HMD), network terminal, a mobile computing device, and so on. In some examples, such as illustrated by programmable devices 504a, 504b, 504c, 504e, programmable devices can be directly connected to network 506. In other examples, such as illustrated by programmable device 504d, programmable devices can be indirectly connected to network 506 via an associated computing device, such as programmable device 504c. In this example, programmable device 504c can act as an associated computing device to pass electronic communications between programmable device 504d and network 506. In other examples, such as illustrated by programmable device 504e, a computing device can be part of and/or inside a vehicle, such as a car, a truck, a bus, a boat or ship, an airplane, etc. In other examples not shown in FIG. 5, a programmable device can be both directly and indirectly connected to network 506.

Server devices 508, 510 can be configured to perform one or more services, as requested by programmable devices 504a-504e. For example, server device 508 and/or 510 can provide content to programmable devices 504a-504e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server devices 508 and/or 510 can provide programmable devices 504a-504e with access to software for database, search, computation, graphical, audio, video, World Wide Web/Internet utilization, and/or other functions. Many other examples of server devices are possible as well.

### Computing Device Architecture

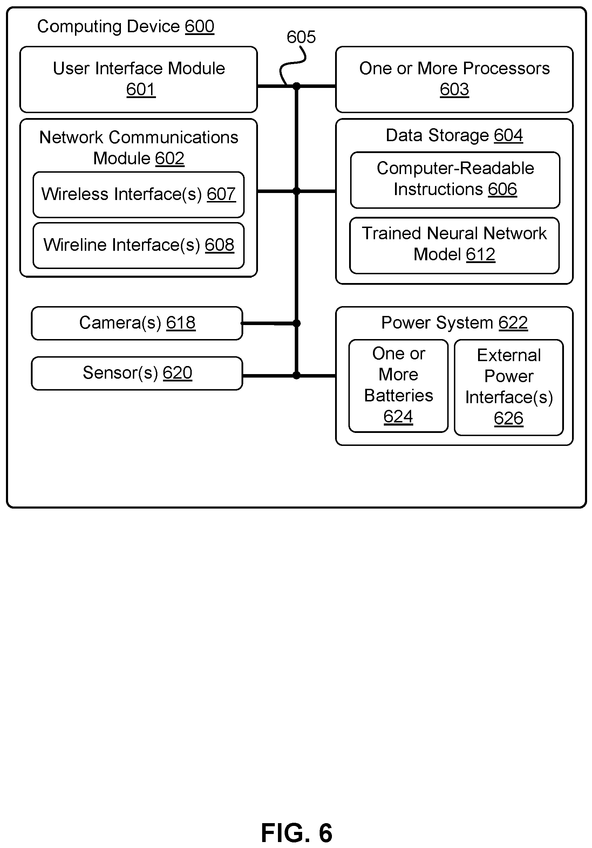

FIG. 6 is a block diagram of an example computing device 600, in accordance with example embodiments. In particular, computing device 600 shown in FIG. 6 can be configured to perform at least one function of and/or related to convolutional neural networks 140, 225, and/or method 800.

Computing device 600 may include a user interface module 601, a network communications module 602, one or more processors 603, data storage 604, one or more cameras 618, one or more sensors 620, and power system 622, all of which may be linked together via a system bus, network, or other connection mechanism 605.

User interface module 601 can be operable to send data to and/or receive data from external user input/output devices. For example, user interface module 601 can be configured to send and/or receive data to and/or from user input devices such as a touch screen, a computer mouse, a keyboard, a keypad, a touch pad, a trackball, a joystick, a voice recognition module, and/or other similar devices. User interface module 601 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 601 can also be configured to generate audible outputs, with devices such as a speaker, speaker jack, audio output port, audio output device, earphones, and/or other similar devices. User interface module 601 can further be configured with one or more haptic devices that can generate haptic outputs, such as vibrations and/or other outputs detectable by touch and/or physical contact with computing device 600. In some examples, user interface module 601 can be used to provide a graphical user interface (GUI) for utilizing computing device 600.

Network communications module 602 can include one or more devices that provide one or more wireless interfaces 607 and/or one or more wireline interfaces 608 that are configurable to communicate via a network. Wireless interface(s) 607 can include one or more wireless transmitters, receivers, and/or transceivers, such as a Bluetooth^{™} transceiver, a Zigbee^{®} transceiver, a Wi-Fi^{™} transceiver, a WiMAX^{™} transceiver, an LTE^{™} transceiver, and/or other type of wireless transceiver configurable to communicate via a wireless network. Wireline interface(s) 608 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

In some examples, network communications module 602 can be configured to provide reliable, secured, and/or authenticated communications. For each communication described herein, information for facilitating reliable communications (e.g., guaranteed message delivery) can be provided, perhaps as part of a message header and/or footer (*e.g.,* packet/message sequencing information, encapsulation headers and/or footers, size/time information, and transmission verification information such as cyclic redundancy check (CRC) and/or parity check values). Communications can be made secure (e.g., be encoded or encrypted) and/or decrypted/decoded using one or more cryptographic protocols and/or algorithms, such as, but not limited to, Data Encryption Standard (DES), Advanced Encryption Standard (AES), a Rivest-Shamir-Adelman (RSA) algorithm, a Diffie-Hellman algorithm, a secure sockets protocol such as Secure Sockets Layer (SSL) or Transport Layer Security (TLS), and/or Digital Signature Algorithm (DSA). Other cryptographic protocols and/or algorithms can be used as well or in addition to those listed herein to secure (and then decrypt/decode) communications.

One or more processors 603 can include one or more general purpose processors, and/or one or more special purpose processors (e.g., digital signal processors, tensor processing units (TPUs), graphics processing units (GPUs), application specific integrated circuits, etc.). One or more processors 603 can be configured to execute computer-readable instructions 606 that are contained in data storage 604 and/or other instructions as described herein.

Data storage 604 can include one or more non-transitory computer-readable storage media that can be read and/or accessed by at least one of one or more processors 603. The one or more computer-readable storage media can include volatile and/or non-volatile storage components, such as optical, magnetic, organic or other memory or disc storage, which can be integrated in whole or in part with at least one of one or more processors 603. In some examples, data storage 604 can be implemented using a single physical device (e.g., one optical, magnetic, organic or other memory or disc storage unit), while in other examples, data storage 604 can be implemented using two or more physical devices.

Data storage 604 can include computer-readable instructions 606 and perhaps additional data. In some examples, data storage 604 can include storage required to perform at least part of the herein-described methods, scenarios, and techniques and/or at least part of the functionality of the herein-described devices and networks. In some examples, data storage 604 can include storage for a trained neural network model 612 (*e.g.,* a model of trained convolutional neural networks such as convolutional neural networks 140). In particular of these examples, computer-readable instructions 606 can include instructions that, when executed by processor(s) 603, enable computing device 600 to provide for some or all of the functionality of trained neural network model 612.

In some examples, computing device 600 can include one or more cameras 618. Camera(s) 618 can include one or more image capture devices, such as still and/or video cameras, equipped to capture light and record the captured light in one or more images; that is, camera(s) 618 can generate image(s) of captured light. The one or more images can be one or more still images and/or one or more images utilized in video imagery. Camera(s) 618 can capture light and/or electromagnetic radiation emitted as visible light, infrared radiation, ultraviolet light, and/or as one or more other frequencies of light.

In some examples, computing device 600 can include one or more sensors 620. Sensors 620 can be configured to measure conditions within computing device 600 and/or conditions in an environment of computing device 600 and provide data about these conditions. For example, sensors 620 can include one or more of: (i) sensors for obtaining data about computing device 600, such as, but not limited to, a thermometer for measuring a temperature of computing device 600, a battery sensor for measuring power of one or more batteries of power system 622, and/or other sensors measuring conditions of computing device 600; (ii) an identification sensor to identify other objects and/or devices, such as, but not limited to, a Radio Frequency Identification (RFID) reader, proximity sensor, one-dimensional barcode reader, two-dimensional barcode (e.g., Quick Response (QR) code) reader, and a laser tracker, where the identification sensors can be configured to read identifiers, such as RFID tags, barcodes, QR codes, and/or other devices and/or object configured to be read and provide at least identifying information; (iii) sensors to measure locations and/or movements of computing device 600, such as, but not limited to, a tilt sensor, a gyroscope, an accelerometer, a Doppler sensor, a GPS device, a sonar sensor, a radar device, a laser-displacement sensor, and a compass; (iv) an environmental sensor to obtain data indicative of an environment of computing device 600, such as, but not limited to, an infrared sensor, an optical sensor, a light sensor, a biosensor, a capacitive sensor, a touch sensor, a temperature sensor, a wireless sensor, a radio sensor, a movement sensor, a microphone, a sound sensor, an ultrasound sensor and/or a smoke sensor; and/or (v) a force sensor to measure one or more forces (e.g., inertial forces and/or G-forces) acting about computing device 600, such as, but not limited to one or more sensors that measure: forces in one or more dimensions, torque, ground force, friction, and/or a zero moment point (ZMP) sensor that identifies ZMPs and/or locations of the ZMPs. Many other examples of sensors 620 are possible as well.

Power system 622 can include one or more batteries 624 and/or one or more external power interfaces 626 for providing electrical power to computing device 600. Each battery of the one or more batteries 624 can, when electrically coupled to the computing device 600, act as a source of stored electrical power for computing device 600. One or more batteries 624 of power system 622 can be configured to be portable. Some or all of one or more batteries 624 can be readily removable from computing device 600. In other examples, some or all of one or more batteries 624 can be internal to computing device 600, and so may not be readily removable from computing device 600. Some or all of one or more batteries 624 can be rechargeable. For example, a rechargeable battery can be recharged via a wired connection between the battery and another power supply, such as by one or more power supplies that are external to computing device 600 and connected to computing device 600 via the one or more external power interfaces. In other examples, some or all of one or more batteries 624 can be non-rechargeable batteries.

One or more external power interfaces 626 of power system 622 can include one or more wired-power interfaces, such as a USB cable and/or a power cord, that enable wired electrical power connections to one or more power supplies that are external to computing device 600. One or more external power interfaces 626 can include one or more wireless power interfaces, such as a Qi wireless charger, that enable wireless electrical power connections, such as via a Qi wireless charger, to one or more external power supplies. Once an electrical power connection is established to an external power source using one or more external power interfaces 626, computing device 600 can draw electrical power from the external power source the established electrical power connection. In some examples, power system 622 can include related sensors, such as battery sensors associated with one or more batteries or other types of electrical power sensors.

### Cloud-Based Servers

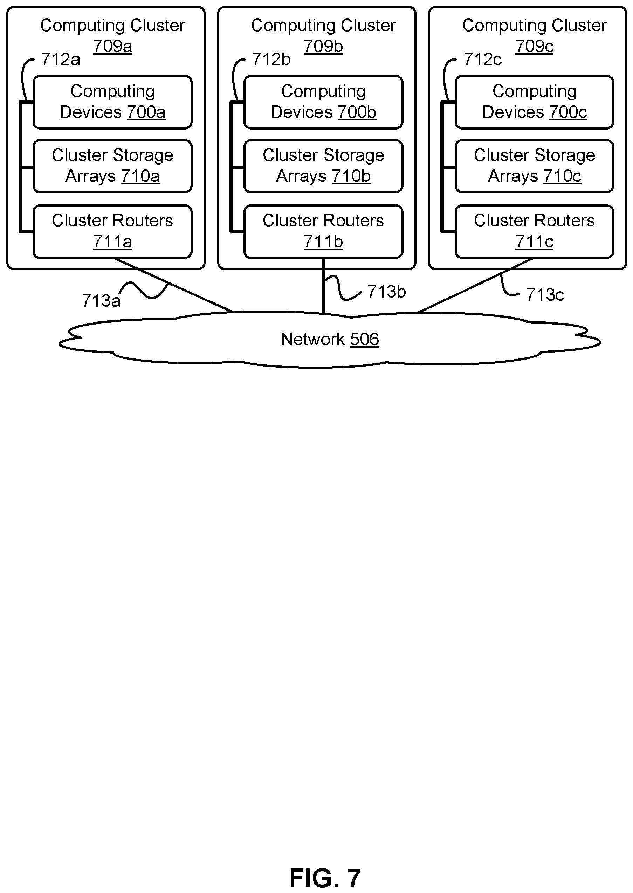

FIG. 7 depicts a network 506 of computing clusters 709a, 709b, 709c arranged as a cloud-based server system in accordance with an example embodiment. Computing clusters 709a, 709b, and 709c can be cloud-based devices that store program logic and/or data of cloud-based applications and/or services; e.g., perform at least one function of and/or related to convolutional neural networks 140, 225, and/or method 800.

In some embodiments, computing clusters 709a, 709b, and 709c can be a single computing device residing in a single computing center. In other embodiments, computing clusters 709a, 709b, and 709c can include multiple computing devices in a single computing center, or even multiple computing devices located in multiple computing centers located in diverse geographic locations. For example, FIG. 7 depicts each of computing clusters 709a, 709b, and 709c residing in different physical locations.

In some embodiments, data and services at computing clusters 709a, 709b, 709c can be encoded as computer readable information stored in non-transitory, tangible computer readable media (or computer readable storage media) and accessible by other computing devices. In some embodiments, computing clusters 709a, 709b, 709c can be stored on a single disk drive or other tangible storage media, or can be implemented on multiple disk drives or other tangible storage media located at one or more diverse geographic locations.

In FIG. 7, functionality of convolutional neural networks 140, 225, and/or a computing device can be distributed among computing clusters 709a, 709b, 709c. Computing cluster 709a can include one or more computing devices 700a, cluster storage arrays 710a, and cluster routers 711a connected by a local cluster network 712a. Similarly, computing cluster 709b can include one or more computing devices 700b, cluster storage arrays 710b, and cluster routers 711b connected by a local cluster network 712b. Likewise, computing cluster 709c can include one or more computing devices 700c, cluster storage arrays 710c, and cluster routers 711c connected by a local cluster network 712c.

In some embodiments, each of computing clusters 709a, 709b, and 709c can have an equal number of computing devices, an equal number of cluster storage arrays, and an equal number of cluster routers. In other embodiments, however, each computing cluster can have different numbers of computing devices, different numbers of cluster storage arrays, and different numbers of cluster routers. The number of computing devices, cluster storage arrays, and cluster routers in each computing cluster can depend on the computing task or tasks assigned to each computing cluster.

In computing cluster 709a, for example, computing devices 700a can be configured to perform various computing tasks of convolutional neural network, and/or a computing device. In one embodiment, the various functionalities of a convolutional neural network, and/or a computing device can be distributed among one or more of computing devices 700a, 700b, and 700c. Computing devices 700b and 700c in respective computing clusters 709b and 709c can be configured similarly to computing devices 700a in computing cluster 709a. On the other hand, in some embodiments, computing devices 700a, 700b, and 700c can be configured to perform different functions.

In some embodiments, computing tasks and stored data associated with a convolutional neural networks, and/or a computing device can be distributed across computing devices 700a, 700b, and 700c based at least in part on the processing requirements of convolutional neural networks, and/or a computing device, the processing capabilities of computing devices 700a, 700b, 700c, the latency of the network links between the computing devices in each computing cluster and between the computing clusters themselves, and/or other factors that can contribute to the cost, speed, fault-tolerance, resiliency, efficiency, and/or other design goals of the overall system architecture.

Cluster storage arrays 710a, 710b, 710c of computing clusters 709a, 709b, and 709c can be data storage arrays that include disk array controllers configured to manage read and write access to groups of hard disk drives. The disk array controllers, alone or in conjunction with their respective computing devices, can also be configured to manage backup or redundant copies of the data stored in the cluster storage arrays to protect against disk drive or other cluster storage array failures and/or network failures that prevent one or more computing devices from accessing one or more cluster storage arrays.

Similar to the manner in which the functions of convolutional neural networks, and/or a computing device can be distributed across computing devices 700a, 700b, 700c of computing clusters 709a, 709b, 709c, various active portions and/or backup portions of these components can be distributed across cluster storage arrays 710a, 710b, 710c. For example, some cluster storage arrays can be configured to store one portion of the data of a convolutional neural network, and/or a computing device, while other cluster storage arrays can store other portion(s) of data of a convolutional neural network, and/or a computing device. Also, for example, some cluster storage arrays can be configured to store the data of a first convolutional neural network, while other cluster storage arrays can store the data of a second and/or third convolutional neural network. Additionally, some cluster storage arrays can be configured to store backup versions of data stored in other cluster storage arrays.

Cluster routers 711a, 711b, 711c in computing clusters 709a, 709b, and 709c can include networking equipment configured to provide internal and external communications for the computing clusters. For example, cluster routers 711a in computing cluster 709a can include one or more internet switching and routing devices configured to provide (i) local area network communications between computing devices 700a and cluster storage arrays 710a via local cluster network 712a, and (ii) wide area network communications between computing cluster 709a and computing clusters 709b and 709c via wide area network link 713a to network 506. Cluster routers 711b and 711c can include network equipment similar to cluster routers 711a, and cluster routers 711b and 711c can perform similar networking functions for computing clusters 709b and 709b that cluster routers 711a perform for computing cluster 709a.

In some embodiments, the configuration of cluster routers 711a, 711b, 711c can be based at least in part on the data communication requirements of the computing devices and cluster storage arrays, the data communications capabilities of the network equipment in cluster routers 711a, 711b, 711c, the latency and throughput of local cluster networks 712a, 712b, 712c, the latency, throughput, and cost of wide area network links 713a, 713b, 713c, and/or other factors that can contribute to the cost, speed, fault-tolerance, resiliency, efficiency and/or other design criteria of the moderation system architecture.

### Example Methods of Operation

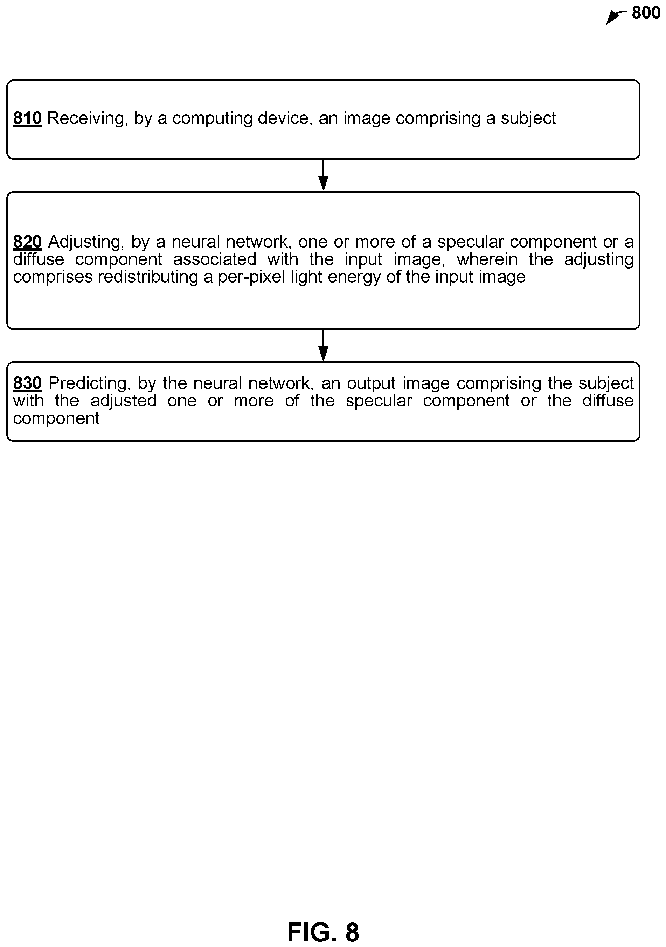

FIG. 8 is a flowchart of a method 800, in accordance with example embodiments. Method 800 can be executed by a computing device, such as computing device 600. Method 800 can begin at block 810, where the method involves receiving, by a computing device, an image comprising a subject.

At block 820, the method further involves adjusting, by a neural network, one or more of a specular component or a diffuse component associated with the input image, wherein the adjusting comprises redistributing a per-pixel light energy of the input image, such as discussed above at least in the context of FIGS. 1-3.

At block 830, the method also involves predicting, by the neural network, an output image comprising the subject with the adjusted one or more of the specular component or the diffuse component, such as discussed above at least in the context of FIGS. 1-3.

In some embodiments, the adjusting of one or more of the specular component or the diffuse component includes adjusting of the specular component, and wherein the redistributing of the per-pixel light energy involves reducing a specular highlight associated with the subject.

In some embodiments, the adjusting of the one or more of the specular component or the diffuse component includes adjusting of the diffuse component, and wherein the redistributing of the per-pixel light energy involves reducing a per-pixel light energy of a shadow region of the input image.

Some embodiments involve maintaining, via the neural network, an average of global color values associated with the input image.

Some embodiments involve predicting one or more characteristics of a color scheme associated with the specular component.

In some embodiments, the input image is a portrait of the subject.

In some embodiments, the neural network includes a U-net architecture configured to maintain high frequency aspects of the input image.

Some embodiments involve providing, by a graphical user interface of the computing device, a user-adjustable slider bar to indicate an amount of the adjusting of the one or more of the specular component or the diffuse component. Such embodiments also involve receiving, by the graphical user interface, a user-indication of the amount of the adjusting of the one or more of the specular component or the diffuse component. Such embodiments further involve providing, by the graphical user interface, the output image based on the user indicated amount of the adjusting. In some embodiments, the providing of the output image involves applying a linear interpolation of the input image and the output image. The linear interpolation may be based on the user-indication.

In some embodiments, the adjusting of the one or more of the specular component or the diffuse component involves predicting, by the neural network, the output image based on the user indicated amount of the adjusting.

Some embodiments involve training the neural network to receive a particular input image with a particular subject, and predict a particular output image comprising the subject with a particular adjusted one or more of the specular component or the diffuse component.

In some embodiments, a training dataset includes a plurality of image pairs. A first image of a given image pair may include a subject in a lighting environment, and a second image of the given image pair may include the subject in a diffused version of the lighting environment.

In some embodiments, the lighting environment may be a high dynamic range lighting environment. The training involves generating a specular convolution of a portion of the high dynamic range lighting environment. In some embodiments, the generating of the specular convolution involves applying a Phong Reflectance Model.

In some embodiments, the training involves applying an adversarial loss function to a selected portion of the subject. In some embodiments, the selected portion may be a face portion of the subject.

Some embodiments involve providing the output image as an input to another neural network configured to perform image relighting.

Some embodiments involve providing the output image as an input to another neural network configured to perform portrait background replacement.

The present disclosure is not to be limited in terms of the particular embodiments described in this application, which are intended as illustrations of various aspects.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as non-transitory computer-readable media that stores data for short periods of time like register memory, processor cache, and random access memory (RAM). The computer readable media may also include non-transitory computer readable media that stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

## Claims

1. A computer-implemented method, comprising:
receiving (810), by a computing device, an input image comprising a subject;
adjusting (820), by a neural network, one or more of a specular component or a diffuse component associated with the input image, wherein the adjusting comprises redistributing a per-pixel light energy of the input image; and
predicting (830), by the neural network, an output image comprising the subject with the adjusted one or more of the specular component or the diffuse component;
wherein the neural network has been trained, using a training dataset, to receive a particular input image with a particular subject, and predict a particular output image comprising the subject with a particular adjusted one or more of the specular component or the diffuse component, wherein the training dataset comprises a plurality of image pairs, wherein a first image of a given image pair comprises a subject in a lighting environment, and wherein a second image of the given image pair comprises the subject in a diffused version of the lighting environment.

2. The computer-implemented method of claim 1, wherein the adjusting of one or more of the specular component or the diffuse component comprises adjusting of the specular component, and wherein the redistributing of the per-pixel light energy comprises reducing a specular highlight associated with the subject.

3. The computer-implemented method of claim 1, wherein the adjusting of the one or more of the specular component or the diffuse component comprises adjusting of the diffuse component, and wherein the redistributing of the per-pixel light energy comprises reducing a per-pixel light energy of a shadow region of the input image.

4. The computer-implemented method of claims 1 or 2, further comprising:
maintaining, via the neural network, an average of global color values associated with the input image.

5. The computer-implemented method of any of claims 1, 2, or 4, further comprising:
predicting one or more characteristics of a color scheme associated with the specular component.

6. The computer-implemented method of any of claims 1-5, wherein the input image is a portrait of the subject.

7. The computer-implemented method of any of claims 1-6, wherein the neural network comprises a U-net architecture configured to maintain high frequency aspects of the input image.

8. The computer-implemented method of any of claims 1-7, further comprising:
providing, by a graphical user interface of the computing device, a user-adjustable slider bar to indicate an amount of the adjusting of the one or more of the specular component or the diffuse component;
receiving, by the graphical user interface, a user-indication of the amount of the adjusting of the one or more of the specular component or the diffuse component; and
providing, by the graphical user interface, the output image based on the user indicated amount of the adjusting.

9. The computer-implemented method of claim 8, wherein the providing of the output image comprises applying a linear interpolation of the input image and the output image, and wherein the linear interpolation is based on the user-indication.

10. The computer-implemented method of claim 8, wherein the adjusting of the one or more of the specular component or the diffuse component comprises predicting, by the neural network, the output image based on the user indicated amount of the adjusting.

11. The computer-implemented method of any of claims 1-10, further comprising:
training the neural network, using the training dataset, to receive a particular input image with a particular subject, and predict a particular output image comprising the subject with a particular adjusted one or more of the specular component or the diffuse component.

12. The computer-implemented method of any of claims 1 - 11, wherein the lighting environment is a high dynamic range lighting environment, and wherein the training comprises generating a specular convolution of a portion of the high dynamic range lighting environment, optionally wherein the generating of the specular convolution comprises applying a Phong Reflectance Model.

13. The computer-implemented method of claim any of claims 1 - 12, wherein the training comprises applying an adversarial loss function to a selected portion of the subject, optionally wherein the selected portion is a face portion of the subject.

14. A computing device, comprising:
one or more processors; and
data storage, wherein the data storage has stored thereon computer-executable instructions that, when executed by the one or more processors, cause the computing device to carry out functions comprising the computer-implemented method of any one of claims 1-13.

15. An article of manufacture comprising one or more computer readable media having computer-readable instructions stored thereon that, when executed by one or more processors of a computing device, cause the computing device to carry out functions that comprise the computer-implemented method of any one of claims 1-13.

## Patentansprüche

1. Computerimplementiertes Verfahren, umfassend:
Empfangen (810) eines Eingabebildes durch eine Rechenvorrichtung, umfassend ein Subjekt;
Anpassen (820) einer oder mehrerer von einer Spiegelkomponente oder einer diffusen Komponente, die mit dem Eingabebild verknüpft ist, durch ein neuronales Netzwerk, wobei das Anpassen das Umverteilen einer Lichtenergie pro Pixel des Eingabebildes umfasst; und
Vorhersagen (830) eines Ausgabebildes durch das neuronale Netzwerk, umfassend das Subjekt mit der einen oder den mehreren angepassten von der Spiegelkomponente oder der diffusen Komponente;
wobei das neuronale Netzwerk unter Verwendung eines Trainingsdatensatzes trainiert wurde, um ein bestimmtes Eingabebild mit einem bestimmten Subjekt zu empfangen und ein bestimmtes Ausgabebild vorherzusagen, umfassend das Subjekt mit einer oder mehreren bestimmten angepassten der Spiegelkomponente oder der diffusen Komponente, wobei der Trainingsdatensatz eine Vielzahl von Bildpaaren umfasst, wobei ein erstes Bild eines gegebenen Bildpaares ein Subjekt in einer Beleuchtungsumgebung umfasst, und wobei ein zweites Bild des gegebenen Bildpaares das Subjekt in einer diffusen Version der Beleuchtungsumgebung umfasst.

2. Computerimplementiertes Verfahren nach Anspruch 1, wobei das Anpassen einer oder mehrerer der Spiegelkomponente oder der diffusen Komponente das Anpassen der Spiegelkomponente umfasst, und wobei das Umverteilen der Lichtenergie pro Pixel das Reduzieren eines Spiegelglanzlichts umfasst, das mit dem Subjekt verknüpft ist.

3. Computerimplementiertes Verfahren nach Anspruch 1, wobei das Anpassen von der einen oder den mehreren von der Spiegelkomponente oder der diffusen Komponente das Anpassen der diffusen Komponente umfasst, und wobei das Umverteilen der Lichtenergie pro Pixel das Reduzieren einer Lichtenergie pro Pixel eines Schattenbereichs des Eingangsbildes umfasst.

4. Computerimplementiertes Verfahren nach Anspruch 1 oder 2, ferner umfassend:
Aufrechterhalten eines Durchschnitts globaler Farbwerte, die mit dem Eingabebild verknüpft sind, über das neuronale Netzwerk.

5. Computerimplementiertes Verfahren nach einem der Ansprüche 1, 2 oder 4, ferner umfassend:
Vorhersagen einer oder mehrerer Eigenschaften eines Farbschemas, die mit der Spiegelkomponente verknüpft sind.

6. Computerimplementiertes Verfahren nach einem der Ansprüche 1-5, wobei das Eingabebild ein Porträt des Subjekts ist.

7. Computerimplementiertes Verfahren nach einem der Ansprüche 1-6, wobei das neuronale Netzwerk eine U-Netz-Architektur umfasst, die dazu konfiguriert ist, Hochfrequenzaspekte des Eingangsbildes aufrechtzuerhalten.

8. Computerimplementiertes Verfahren nach einem der Ansprüche 1-7, ferner umfassend:
Bereitstellen eines durch Benutzer einstellbaren Schiebereglers durch eine grafische Benutzeroberfläche der Rechenvorrichtung, um den Grad des Anpassens der einen oder mehreren von der Spiegelkomponente oder der diffusen Komponente anzuzeigen;
Empfangen einer Benutzerangabe des Grads des Anpassens der einen oder mehreren von der Spiegelkomponente oder der diffusen Komponente durch die grafische Benutzeroberfläche; und
Bereitstellen des Ausgabebildes durch die grafische Benutzeroberfläche basierend auf dem durch Benutzer angegebenen Grad des Anpassens.

9. Computerimplementiertes Verfahren nach Anspruch 8, wobei das Bereitstellen des Ausgabebildes das Anwenden einer linearen Interpolation des Eingabebildes und des Ausgabebildes umfasst, und wobei die lineare Interpolation auf der Benutzerangabe basiert.

10. Computerimplementiertes Verfahren nach Anspruch 8, wobei das Anpassen der einen oder mehreren von der Spiegelkomponente oder der diffusen Komponente das Vorhersagen des Ausgabebildes durch das neuronale Netzwerk basierend auf dem durch Benutzer angegebenen Grad des Anpassens umfasst.

11. Computerimplementiertes Verfahren nach einem der Ansprüche 1-10, ferner umfassend:
Trainieren des neuronalen Netzwerks unter Verwendung des Trainingsdatensatzes, um ein bestimmtes Eingabebild mit einem bestimmten Subjekt zu empfangen und ein bestimmtes Ausgabebild vorherzusagen, umfassend das Subjekt mit einer oder mehreren bestimmten angepassten von der Spiegelkomponente und/oder der diffusen Komponente.

12. Computerimplementiertes Verfahren nach einem der Ansprüche 1-11, wobei die Beleuchtungsumgebung eine Beleuchtungsumgebung mit hohem Dynamikbereich ist, und wobei das Trainieren das Generieren einer spiegelnden Faltung eines Abschnitts der Beleuchtungsumgebung mit hohem Dynamikbereich umfasst, wobei das Generieren der spiegelnden Faltung optional das Anwenden eines Phong-Reflexionsmodells umfasst.

13. Computerimplementiertes Verfahren nach einem der Ansprüche 1-12, wobei das Trainieren das Anwenden einer adversariellen Verlustfunktion auf einen ausgewählten Abschnitt des Subjekts umfasst, wobei der ausgewählte Abschnitt optional ein Gesichtsabschnitt des Subjekts ist.

14. Rechenvorrichtung, umfassend:
einen oder mehrere Prozessoren; und
einen Datenspeicher, wobei auf dem Datenspeicher computerausführbare Anweisungen gespeichert sind, die bei Ausführung durch den einen oder die mehreren Prozessoren bewirken, dass die Rechenvorrichtung Funktionen durchführt, umfassend das computerimplementierte Verfahren nach einem der Ansprüche 1-13.

15. Artikel zur Herstellung, umfassend ein oder mehrere computerlesbare Medien, die darauf gespeicherte computerlesbare Anweisungen aufweisen, die bei Ausführung durch einen oder mehrere Prozessoren einer Rechenvorrichtung bewirken, dass die Rechenvorrichtung Funktionen durchführt, die das computerimplementierte Verfahren nach einem der Ansprüche 1-13 umfassen.

## Revendications

1. Procédé mis en œuvre par ordinateur, comprenant :
la réception (810), par un dispositif informatique, d'une image d'entrée comprenant un sujet ;
le réglage (820), par un réseau neuronal, d'une ou de plusieurs parmi une composante spéculaire ou une composante diffuse associée à l'image d'entrée, dans lequel le réglage comprend la redistribution d'une énergie lumineuse par pixel de l'image d'entrée ; et
la prédiction (830), par le réseau neuronal, d'une image de sortie comprenant le sujet avec les une ou plusieurs composantes réglées parmi la composante spéculaire ou la composante diffuse ;
dans lequel le réseau neuronal a été entraîné, à l'aide d'un ensemble de données d'entraînement, à recevoir une image d'entrée particulière avec un sujet particulier et à prédire une image de sortie particulière comprenant le sujet avec une ou plusieurs composantes réglées particulières parmi la composante spéculaire ou la composante diffuse, dans lequel l'ensemble de données d'entraînement comprend une pluralité de paires d'images, dans lequel une première image d'une paire d'images donnée comprend un sujet dans un environnement d'éclairage, et dans lequel une seconde image de la paire d'images donnée comprend le sujet dans une version diffusée de l'environnement d'éclairage.

2. Procédé mis en œuvre par ordinateur selon la revendication 1, dans lequel le réglage d'une ou de plusieurs parmi la composante spéculaire ou la composante diffuse comprend le réglage de la composante spéculaire, et dans lequel la redistribution de l'énergie lumineuse par pixel comprend la réduction d'un reflet spéculaire associé au sujet.

3. Procédé mis en œuvre par ordinateur selon la revendication 1, dans lequel le réglage des une ou plusieurs parmi la composante spéculaire ou la composante diffuse comprend le réglage de la composante diffuse, et dans lequel la redistribution de l'énergie lumineuse par pixel comprend la réduction d'une énergie lumineuse par pixel d'une région d'ombre de l'image d'entrée.

4. Procédé mis en œuvre par ordinateur selon les revendications 1 ou 2, comprenant en outre :
le maintien, via le réseau neuronal, d'une moyenne de valeurs de couleur globales associées à l'image d'entrée.

5. Procédé mis en œuvre par ordinateur selon l'une quelconque des revendications 1, 2 ou 4, comprenant en outre :
la prédiction d'une ou de plusieurs caractéristiques d'une palette de couleurs associée à la composante spéculaire.

6. Procédé mis en œuvre par ordinateur selon l'une quelconque des revendications 1 à 5, dans lequel l'image d'entrée est un portrait du sujet.

7. Procédé mis en œuvre par ordinateur selon l'une quelconque des revendications 1 à 6, dans lequel le réseau neuronal comprend une architecture U-net configurée pour maintenir des aspects haute fréquence de l'image d'entrée.

8. Procédé mis en œuvre par ordinateur selon l'une quelconque des revendications 1 à 7, comprenant en outre :
la fourniture, par une interface utilisateur graphique du dispositif informatique, d'une barre de curseur réglable par l'utilisateur pour indiquer une quantité du réglage des une ou plusieurs parmi la composante spéculaire ou la composante diffuse ;
la réception, par l'interface utilisateur graphique, d'une indication d'utilisateur de la quantité du réglage des une ou plusieurs parmi la composante spéculaire ou la composante diffuse ; et
la fourniture, par l'interface utilisateur graphique, de l'image de sortie sur la base de la quantité du réglage indiquée par l'utilisateur.

9. Procédé mis en œuvre par ordinateur selon la revendication 8, dans lequel la fourniture de l'image de sortie comprend l'application d'une interpolation linéaire de l'image d'entrée et de l'image de sortie, et dans lequel l'interpolation linéaire est sur la base de l'indication d'utilisateur.

10. Procédé mis en œuvre par ordinateur selon la revendication 8, dans lequel le réglage des une ou plusieurs parmi la composante spéculaire ou la composante diffuse comprend la prédiction, par le réseau neuronal, de l'image de sortie sur la base de la quantité du réglage indiquée par l'utilisateur.

11. Procédé mis en œuvre par ordinateur selon l'une quelconque des revendications 1 à 10, comprenant en outre :
l'entraînement du réseau neuronal, à l'aide de l'ensemble de données d'entraînement, à recevoir une image d'entrée particulière avec un sujet particulier et à prédire une image de sortie particulière comprenant le sujet avec une ou plusieurs composantes réglées particulières parmi la composante spéculaire ou la composante diffuse.

12. Procédé mis en œuvre par ordinateur selon l'une quelconque des revendications 1 à 11, dans lequel l'environnement d'éclairage est un environnement d'éclairage à grande gamme dynamique, et dans lequel l'entraînement comprend la génération d'une convolution spéculaire d'une partie de l'environnement d'éclairage à grande gamme dynamique, éventuellement dans lequel la génération de la convolution spéculaire comprend l'application d'un modèle de réflectance de Phong.

13. Procédé mis en œuvre par ordinateur selon l'une quelconque des revendications 1 à 12, dans lequel l'entraînement comprend l'application d'une fonction de perte adverse à une partie sélectionnée du sujet, éventuellement dans lequel la partie sélectionnée est une partie de visage du sujet.

14. Dispositif informatique, comprenant :
un ou plusieurs processeurs ; et
un stockage de données, dans lequel le stockage de données contient des instructions exécutables par ordinateur stockées dans celui-ci qui, lorsqu'elles sont exécutées par les un ou plusieurs processeurs, amènent le dispositif informatique à réaliser des fonctions comprenant le procédé mis en œuvre par ordinateur selon l'une quelconque des revendications 1 à 13.

15. Article manufacturé comprenant un ou plusieurs supports lisibles par ordinateur ayant des instructions lisibles par ordinateur stockées dans ceux-ci qui, lorsqu'elles sont exécutées par un ou plusieurs processeurs d'un dispositif informatique, amènent le dispositif informatique à réaliser des fonctions qui comprennent le procédé mis en œuvre par ordinateur selon l'une quelconque des revendications 1 à 13.
